# EUROPÄISCHE PATENTSCHRIFT

(11) **EP 3 756 057 B1**
(45) Veröffentlichungstag und Bekanntmachung des Hinweises auf die Patenterteilung: **30.03.2022**
(21) Anmeldenummer: 18786705.6
(22) Anmeldetag: 09.10.2018
(51) Int. Cl.: F16K 31/524, G05D 23/02, F16K 31/00, F16K 31/60, F24D 19/10

(54) **STELLANTRIEB FÜR EIN VENTIL SOWIE ANORDNUNG MIT DEMSELBEN**
ACTUATING DRIVE FOR A VALVE AND ARRANGEMENT HAVING THE SAME
MÉCANISME DE RÉGLAGE POUR UNE SOUPAPE ET ENSEMBLE DOTÉ DUDIT MÉCANISME DE RÉGLAGE

(30) Priorität: 23.02.2018 DE 102018104148
(43) Veröffentlichungstag der Anmeldung: 30.12.2020
(73) Patentinhaber: STRAUB KG, 73337 Bad Überkingen (DE)
(72) Erfinder: STRAUB, Philipp, 73337 Bad Überkingen (DE); STRAUB, Thomas, 73337 Bad Überkingen (DE)
(74) Vertreter: Kuhnen & Wacker Patent- und Rechtsanwaltsbüro PartG mbB
(86) Internationale Anmeldenummer: PCT/EP2018/077428
(87) Internationale Veröffentlichungsnummer: WO 2019/161944

(56) Entgegenhaltungen:
- EP-A2- 1 720 086
- DE-A1- 2 616 529
- US-A- 4 739 925

## Beschreibung

Die Erfindung betrifft einen Stellantrieb für ein Ventil mit einem Betätigungsmittel, einem Stellglied, welches das Betätigungsmittel in Abhängigkeit von Regel- oder Stellgrößen zwischen zwei Endstellungen bewegt, und einem manuell betätigbaren Schaltmittel, mit welchem das Betätigungsmittel in wenigstens eine der beiden Endstellungen unabhängig von den Regel- oder Stellgrößen bewegbar ist. Ferner betrifft die Erfindung eine Anordnung mit einem solchen Stellantrieb und einem Ventil.

Eine solcher Stellantrieb und eine solche Anordnung sind aus der EP 2 878 814 A1 bekannt.

Derartige Stellantriebe werden zum Beispiel zum Steuern oder Regeln eines Raumtemperierungssystems in Gebäuden, um die Innentemperatur eines Raumes in engen Grenzen auf einer angenehmen oder, z.B. bei Kühlhäusern für verderbliche Waren, geeigneten Lagertemperatur zu halten. Dabei regeln oder steuern die Stellantriebe die Durchflussmenge eines die Wärme oder Kälte transportierenden Fluides, zumeist Wasser, durch einen Heiz- oder Kühlkreislauf (nachfolgend zur Vereinfachung einfach Kreislauf genannt), wie zum Beispiel in einem oder mehreren Heizkörpern oder einer Flächenheizung, etwa einer Fußbodenheizung oder Wandflächenheizung, oder einer Kühldecke. Der Stellantrieb steuert oder regelt dabei den Durchflussquerschnitt für das Fluid durch ein Ventil, beispielsweise einem Rücklaufventil, seltener auch einem Vorlaufventil.

Der in der EP 2 878 814 A1 gezeigte Stellantrieb weist einen Hebel auf, mit welchem sich der Stellantrieb manuell ein- und ausschalten lassen soll.

Aus der DE 195 13 996 A1 ist ein Stellantrieb bekannt, bei welchem sich die Stellung eines Ventiltellers mittels eines Schiebers verstellen lässt.

US 4 739 925 A zeigt einen Stellantrieb für ein Ventil nach dem Oberbegriff des Anspruchs 1.

Für eine Montage oder Demontage des Stellantriebs an bzw. von dem Ventil sollte der Stellantrieb in die vollständig geöffnete Stellung für das Ventil gefahren werden (Montagestellung), damit keine oder nur sehr geringe Kräfte zwischen dem Betätigungsmittel des Stellantriebs und einem Ventilstift des Ventils wirken, welche sonst insbesondere die Montage aber auch die Demontage stören könnten.

Hiervon ausgehend liegt der Erfindung das Problem zugrunde, einen Stellantrieb und eine Anordnung mit einem solchen Stellantrieb zu schaffen, mit dem sich der Stellantrieb auf einfache und bequeme Weise in eine seiner Endstellungen, insbesondere in die Stellung für das vollständig geöffnete Ventil schalten lässt.

Zur Lösung dieses Problems ist der erfindungsgemäße Stellantrieb dadurch gekennzeichnet, dass das Schaltmittel ein Exzenter ist, welcher über ein manuelles Betätigungselement betätigbar ist. Die erfindungsgemäße Anordnung weist einen solchen Stellantrieb und ein Ventil auf, welches durch den Stellantrieb in verschiedenen Stellungen zwischen einer vollständig geöffneten und einer vollständig geschlossenen Stellung einstellbar ist, wobei die Anordnung dadurch gekennzeichnet ist, dass das Ventil mittels des Exzenters in eine vollständig geöffnete Stellung einstellbar ist.

Mit dem erfindungsgemäßen Stellantrieb lässt sich das Ventil schnell und bequem in wenigstens eine seiner Endstellungen, also in der Praxis vollständig offen einstellen. Es ließen sich sogar Zwischenstellungen einfach und bequem einstellen, obwohl dieses für die Praxis kaum von Relevanz ist.

Nach einer Weiterbildung der Erfindung wirkt der Exzenter mit dem Stellglied des Stellantriebes, also nicht direkt mit dem unmittelbar auf den Ventilstift einwirkenden Betätigungsmittel zusammen. Diese Lösung ist konstruktiv einfach auszubilden.

Erfindungsgemäss weist der Exzenter eine Kuppe auf, welche in einer Montagestellung des Exzenters in eine korrespondierende Vertiefung einschnappt. Dieses Einschnappen spürt der Bediener, wenn er den Exzenter in die geöffnete Position verdreht und bekommt so signalisiert, dass sich der Exzenter in der geöffneten Position befindet. Die Vertiefung ist dabei nach einer konstruktiv einfachen Ausgestaltung dem Stellglied zugeordnet.

Ferner kann das Stellglied eine Rampe aufweisen, an welcher eine Außenkontur des Exzenters anliegt, wenn der Exzenter sich in der geschlossenen Position befindet. Hierdurch lässt sich der Exzenter weich und komfortabel verdrehen. Besonders weich und komfortabel ist es, wenn die Rampe eine Tangente zu dem Bereich der Außenkontur des Exzenters bildet, der an der Rampe anliegt, wenn sich der Exzenter in der geschlossenen Position befindet.

Als Betätigungselement eignet sich jedes geeignete Mittel, mit welchem sich ein Exzenter manuell verdrehen lässt. Zum Beispiel käme ein Rändelrad in Betracht. Vorzugsweise wird jedoch ein manuell verschwenkbarer Hebel verwendet.

Der Exzenter und das Betätigungselement können nach einer konstruktiv einfachen Ausgestaltung über einen Wellenstummel miteinander verbunden sein, der dann ggf. gleichzeitig zur Lagerung in einem Gehäuse dienen kann. Besonders einfach wäre eine einstückige Verbindung.

Um ein Eindringen von Staub und anderem Schmutz in das Gehäuse zu verhindern, sollte der Wellenstummel gegen gedichtet sein. Hierfür eignet sich ein Kragen, der mit einer Nut zusammen wirkt. Dabei kann der Kragen dem Wellenstummel und die Nut einer Bohrung in dem Gehäuse zugordnet sein.

Vorzugsweise sind zwei Wellenstummel, denen dann jeweils ein Exzenter zugordnet sein kann, zu einander gegenüberliegenden Seiten vorgesehen. Die Wellenstummel werden dann durch den Hebel brückenartig miteinander verbunden. Dieses ergibt ein optisch ansprechendes Design und eine stabile Lagerung des Hebels, da eventuelle Kippmomente auf den Hebel aus der Schwenkebene heraus gut abgeleitet werden können.

Die Drehbewegung des Exzenters kann zusätzlich durch ein Anschlagmittel in Richtung auf die Montagestellung begrenzt werden. Hierdurch wird verhindert, dass der Bediener den Exzenter zu weit dreht und dadurch das Gehäuse aufsprengt. Ferner kann ein Vorspannmittel vorgesehen sein, welches den Exzenter in wenigstens einer Endstellung vorspannt. Der Exzenter und mit ihm sein Betätigungselement (Hebel) ist so in der jeweiligen Stellung vorgespannt ohne zu Wackeln oder gar herunterfallen. Bevorzugt wird der Hebel dabei leicht an das Gehäuse gedrückt Als Vorspannmittel eignet sich eine Nase, die mit einer elastischen Vorspannzunge zusammenwirkt. Dabei kann die Nase dem Exzenter und die Vorspannzunge dem Gehäuse zugeordnet sein. Im Falle von zwei Exzentern können beide oder nur einer der Exzenter über die Vorspannmittel verfügen.

Weitere Merkmale der Erfindung und sich daraus ergebende Vorteile werden nachfolgend anhand eines in der Zeichnung gezeigten Ausführungsbeispiels näher erläutert. In der Zeichnung zeigen:
- Fig. 1: einen Stellantrieb mit den Erfindungsmerkmalen in Seitenansicht in einer ersten Stellung;
- Fig. 2: den Stellantrieb gemäß Fig. 1 in einer Schnittdarstellung in den Ebenen II-II;
- Fig. 3: den Stellantrieb gemäß Fig. 1 in Seitenansicht in teilweise geschnittener Darstellung;
- Fig. 4: den Stellantrieb gemäß Fig. 1 in Seitenansicht in einer weiteren Stellung;
- Fig. 5: den Stellantrieb in der Stellung gemäß Fig. 4 in einer Schnittdarstellung in der Ebenen V-V;
- Fig. 6: den Stellantrieb in der Stellung gemäß Fig. 1 in Seitenansicht in teilweise geschnittener Darstellung;
- Fig. 7: ein Detail VII aus dem Stellantrieb gemäß Fig. 5; und
- Fig. 8: ein Detail VIII aus dem Stellantrieb gemäß Fig. 6.

Der erfindungsgemäße Stellantrieb 10 dient zum Beispiel zum Steuern oder Regeln eines Raumtemperierungssystems in Gebäuden, wie zum Beispiel Heizkörpern oder einer Flächenheizung, etwa einer Fußbodenheizung oder Wandflächenheizung, oder einer Kühldecke. Konkret dient der Stellantrieb 10 zum Öffnen und Schließen eines Ventils 11 für ein Wärme oder Kälte transportierendes Fluid, in der Praxis meist Wasser, durch ein Ventil 11. Bei Flächenheizungen handelt es sich bei dem Ventil 11 in der Regel um das Rücklaufventil.

Der Stellantrieb 10 ist auf dem Ventil 11 montiert. Zu diesem Zweck weist das Ventil 11 im gezeigten Ausführungsbeispiel einen Flansch 12 mit Außengewinde 13 auf, an welchem der Stellantrieb 10 mittels einer Überwurfmutter 14 angeschraubt wird. Das Ventil 11 kann seinerseits in einen Rücklaufverteiler 15 eingebaut sein.

Der Stellantrieb 10 umfasst ein elektrisch ansteuerbares Stellglied 16. Das elektrisch ansteuerbare Stellglied 16 enthält ein in axialer Richtung (Längsachse des Stellantriebs 10) bewegliches Betätigungsmittel 17. Das Betätigungsmittel 17 ist innerhalb des elektrisch ansteuerbaren Stellgliedes 16 angeordnet und weist ein in axialer Richtung längenveränderbares Bauteil, beispielsweise eine Wachspatrone 18, auf, und ist durch eine koaxial dazu konzentrisch angeordnete Spiralfeder 19 vorgespannt. Das längenveränderbare Bauteil kann auch als elektrischer Miniaktuator oder einem anderen geeigneten Aktuator ausgebildet sein. Statt der Spiralfeder 19 sind auch andere eine Vorspannung erzeugende Mittel, beispielsweise ein Ringfederpaket, eine elastische Hülse oder Permanentmagneten, denkbar.

Der Stellantrieb 10 steuert oder regelt, wie weit das Ventil 11 geöffnet bzw. geschlossen ist, in dem es einstellt, wie weit ein in der beispielhaften Ausführungsform als Ventilteller 20 ausgebildeter Ventilkopf vom zughörigen Ventilsitz 21 abgehoben wird. Dazu ist der Ventilteller 20 mit einem Ventilstift 22 verbunden, welcher an seinem dem Ventilteller 20 gegenüberliegenden Ende mit dem Betätigungsmittel 17 des Stellantriebs 10 zusammen wirkt. Über die axiale Betätigung des Ventilstiftes 22 stellt das Betätigungsmittel 17 den Abstand vom Ventilteller 20 zum Ventilsitz 21 und damit den Durchflussquerschnitt des Ventils 11 ein.

Zur Montage und Demontage des Stellantriebs 10 vom Ventil 11 sollte das Ventil 11 vollständig geöffnet sein. Zu diesem Zweck weist der erfindungsgemäße Stellantrieb 10 einen manuell betätigbaren Hebel 23 auf.

Der Hebel 23 ist mittels Wellenstummeln 24 in Bohrungen 25 am Gehäuse 26 des Stellantriebs 10 gelagert. Ferner ist der Wellenstummel 24 mit einem Kragen 27 versehen, der mit einer korrespondierenden Nut 28 in der Bohrung 25 zusammenwirkt. Durch den Kragen 27 und die Nut 28 ist eine Art Labyrinthdichtung gebildet, durch welche der Wellenstummel 24 gegen das Gehäuse 26 abgedichtet ist. Dadurch wird insbesondere das Eindringen von Staub in das Gehäuse 26 wirksam verhindert. Alternativ kann der Bohrung 25 ein Kragen 27 und dem Wellenstummel 24 eine korrespondierende Nut 28 zugeordnet sein.

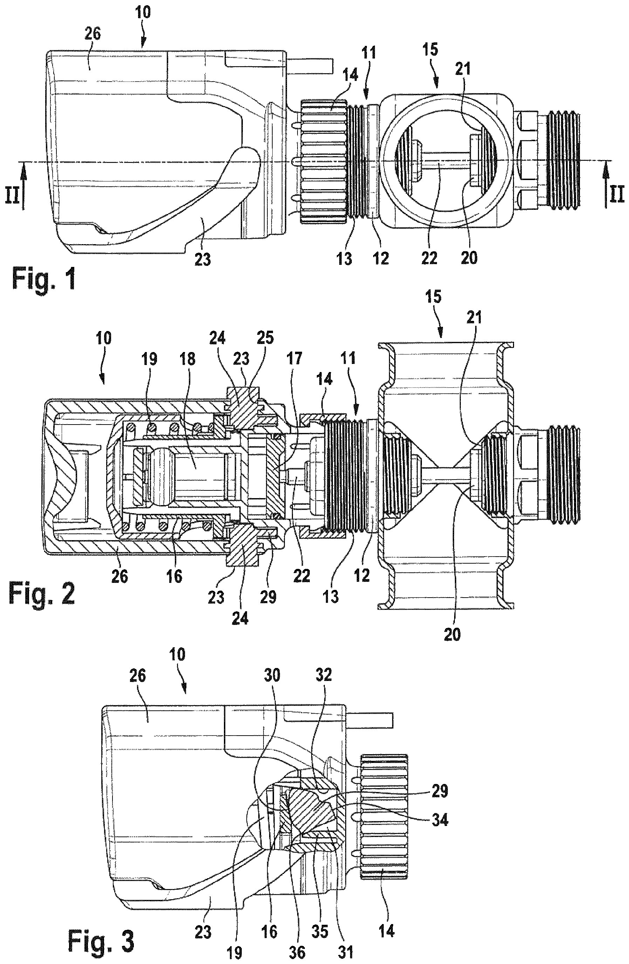

An ihrer in das Innere des Gehäuses 26 weisenden Seite weist wenigstens einer der Wellenstummel 24, vorliegend beide Wellenstummel 24, einen Exzenter 29 auf. Der Exzenter wirkt mit dem Stellglied 16 in folgender Weise zusammen:
In der in den Fig. 1 bis 3 gezeigten Stellung mit am Gehäuse 26 anliegenden Hebel 23 wirkt nur ein kleiner Radius der Außenkontur 30 des Exzenters 29. Diese Stellung entspricht der normalen Betriebsstellung des Stellantriebs 10, in welcher der Stellantrieb 10 den Durchflussquerschnitt des Ventils 11 in der oben beschriebenen Weise regelt oder steuert. Das Stellglied 16 befindet sich durch die Feder 19 vorgespannt in einer nach rechts (gemäß der Darstellung in den Fig. 1 bis 3) in Richtung auf das Ventil 11 verschobenen Stellung. In dieser Stellung kann die Wachspatrone 18 das Stellglied 16 gegen die Kraft der Feder 19 in Antwort auf Stellgrößen aus der Heizungsregelung nach rechts vom Ventil 11 weg verschieben. Dabei wird das Stellglied 16 ggf. von der Außenkontur 30 des Exzenters 29 abgehoben. Mit dem Stellglied 16 bewegt sich auch das mit dem Stellglied 16 wirkverbundene Betätigungsmittel 17 und folglich auch der Ventilstift 22 mit dem Ventilteller 20.

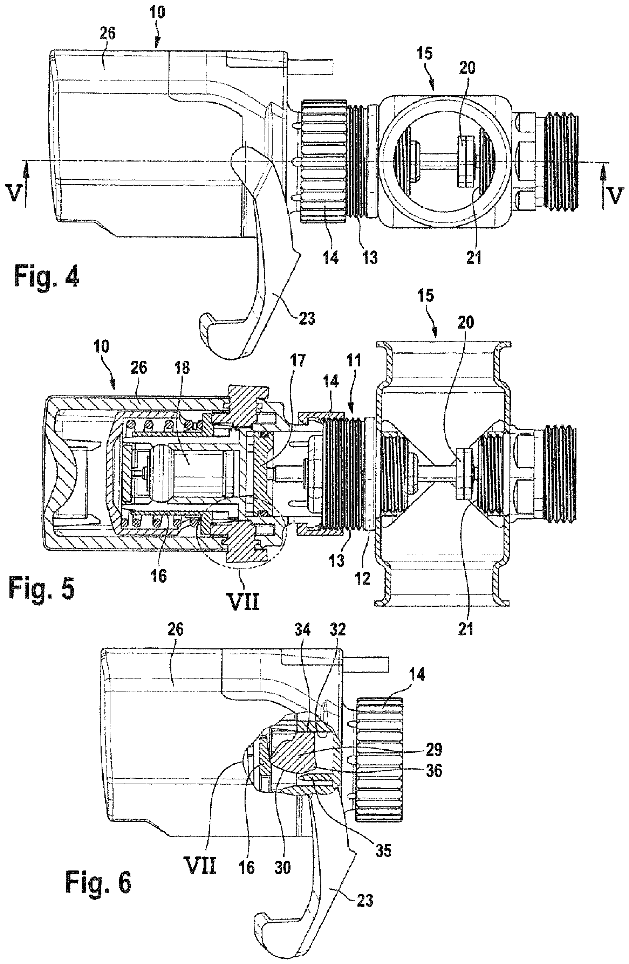

Für eine Montage oder Demontage wird der Hebel 23 in die in Fig. 4 bis 6 dargestellte Stellung geschwenkt, welche im Rahmen der vorliegenden Offenbarung als Montagestellung bezeichnet wird. Dadurch wird auch der Exzenter 29 verdreht. Aufgrund der exzentrisch ausgebildeten Außenkontur 30 des Exzenters 29 wird dadurch auch das Stellglied 16 nach links (gemäß der Darstellung in Fig. 4 bis 6) vom Ventil 11 weg verschoben. Damit wird auch das Betätigungsmittel 17 vom Ventil 11 weg verschoben. Der Ventilstift 22 und der Ventilteller 20 folgen der Bewegung des Betätigungsmittels 17, da sie in üblicherweise in diese Richtung durch eine Feder (nicht gezeigt) gegenüber dem Ventil 11 vorgespannt sind. Diese Stellung ist die vollständig geöffnete Stellung mit dem größten Durchflussquerschnitt. In dieser Stellung wirken keine oder nur sehr geringe Druckkräfte zwischen dem Betätigungsmittel 17 und dem Ventilstift 22, so dass sich der Stellantrieb 10 gut am Ventil 11 montieren oder von ihm demontieren lässt. Ferner erlaubt das Ventil 11 in dieser Stellung die größte Durchflussmenge für das Fluid zum Spülen des Kreislaufs, falls dieses zum Beispiel beim Einbau des Kreislaufs einmal gewünscht sein sollte.

Der Exzenter 29 ist in einer Tasche 31 im Gehäuse 26 angeordnet. Die Tasche 31 weist eine erste Innenwand 32 auf. Ferner ist dem Exzenter 29 ein Anschlag 34 zugeordnet. In der in Fig. 1 bis 3 gezeigten Stellung des Hebels 23 liegt der Anschlag 34 an der ersten Innenwand 32 an und begrenzt so die Drehbewegung des Exzenters 29 und mit ihm die Schwenkbewegung des Hebels 23 in Richtung auf die Montagestellung. Hierdurch wird verhindert, dass das Gehäuse 26 versehentlich durch zu weites Verschwenken des Hebels 23 aufgesprengt wird.

In der Tasche 31 ist ferner eine elastische Zunge 35 vorgesehen, die im vorliegenden Fall auf der der ersten Innenwand 32 gegenüberliegenden Seite des Exzenters 29 angeordnet ist, aber auch an jeder anderen geeigneten Stelle angeordnet sein kann. Die Zunge 35 wirkt mit einer Nase 36 am Exzenter 29 zusammen. Wird der Hebel 23 in die normale, in den Fig. 1 bis 3 gezeigte Betriebsstellung für den Stellantrieb 10 geschwenkt, drückt die Zunge 35 elastisch auf die Rastnase 36, wie in Fig. 6 erkennbar Der Exzenter 29 und mit ihm der Hebel 23 werden dadurch in Richtung auf die Betriebsstellung weiter vorgespannt, wenn der Hebel 23 in die Betriebsstellung geschwenkt wurde. So ist sichergestellt, dass der Hebel 23 immer unter einer leichten Vorspannung in dieser Stellung bleibt und nicht klappert oder ungewollt in Richtung auf die andere Stellung gemäß Fig. 4 bis 6 schwenkt, auch dann nicht, wenn er bei eingebautem Stellantrieb 10 unterhalb des Gehäuses 26 angeordnet ist (wie dargestellt).

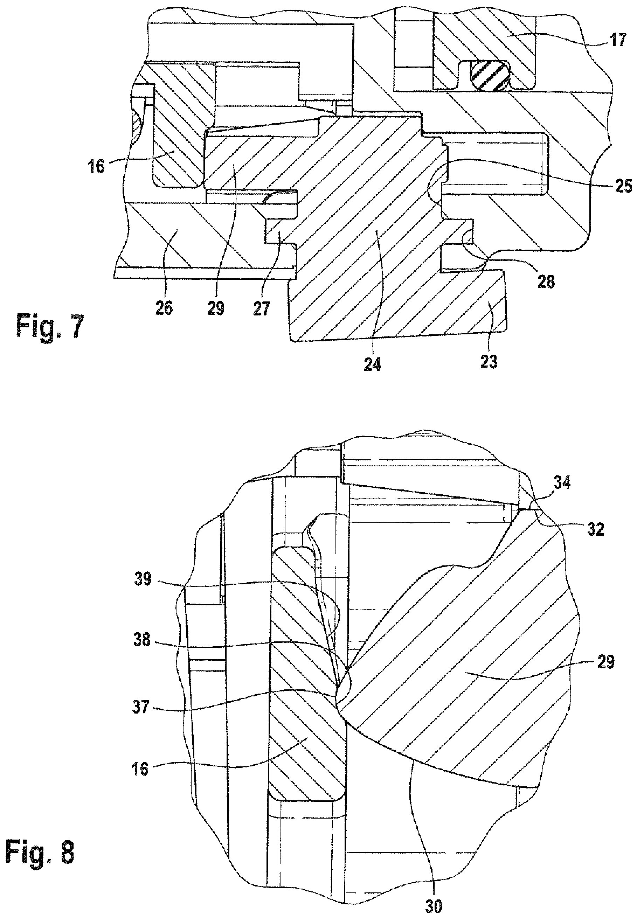

Der Exzenter 29 und das Stellglied 16 sind weiter wie in Fig. 8 näher dargestellt in besonderer Weise ausgebildet. Fig. 8 zeigt dabei den Exzenter 29 in der Montagestellung für das Ventil 11.

Der Exzenter 29 weist eine Kuppe 37 auf, welche die Außenkontur 30 des Exzenters an der der Montagestellung zugeordneten Seite begrenzt. Das Stellglied 16 weist eine zur Kuppe 37 korrespondierende Vertiefung 38 auf, in welche die Kuppe 37 wie in Fig. 8 gezeigt einschnappt, wenn sich der Exzenter 29 in der Montagestellung gemäß Fig. 4 bis 6 befindet. Das Einschnappen der Kuppe 37 in die Vertiefung 38 spürt der Bediener des Hebels 23 und bekommt dadurch signalisiert, dass sich der Exzenter 29 und damit das Ventil 11 in der vollständig geöffneten Position befinden.

Oberhalb der Vertiefung 38 ist das Stellglied 16 mit einer schräg von der Vertiefung 38 weg abfallenden Rampe 39 versehen. Die Rampe 39 befindet sich also von der Vertiefung 38 aus gesehen in der Richtung hin zur Betriebsstellung des Exzenters 29. Wie in Fig. 3 erkennbar, liegt die Außenkontur 30 des Exzenters 29 an der Rampe 39 an, wenn sich der Exzenter in der vollständig geschlossenen Position befindet. Der Winkel der Rampe 39 ist so gewählt, dass die Rampe 39 eine Tangente der Außenkontur 30 des Exzenters 29 bildet, wenn der Exzenter 29 sich in der Betriebsstellung befindet. Hierdurch lässt sich der Exzenter 29 weich und komfortabel öffnen (aus der Betriebsstellung in die Montagestellung verdrehen).

Zu dem insoweit beschriebenen Ausführungsbeispiel sind einige Abwandlungen denkbar, so wäre denkbar, dass der bzw. die Exzenter 29 nicht - gleichsam indirekt - auf dass Stellglied 16 wirken, sondern auf das Betätigungsmittel 17. Auch können die Exzenter 29 an einer anderen geeigneten Stelle am Stellglied 16 angreifen.

### Bezugszeihenliste:

- 10: Stellantrieb
- 11: Ventil
- 12: Flansch
- 13: Außengewinde
- 14: Überwurfmutter
- 15: Rücklaufverteiler
- 16: Stellglied
- 17: Betätigungsmittel
- 18: Wachspatrone
- 19: Spiralfeder
- 20: Ventilteller
- 21: Ventilsitz
- 22: Ventilstift
- 23: Hebel
- 24: Wellenstummel
- 25: Bohrung
- 26: Gehäuse
- 27: Kragen
- 28: Nut
- 29: Exzenter
- 30: Außenkontur
- 31: Tasche
- 32: Innenwand
- 34: Anschlag
- 35: Zunge
- 36: Nase
- 37: Kuppe
- 38: Vertiefung
- 39: Rampe

## Patentansprüche

1. Stellantrieb (10) für ein Ventil (11) mit einem Betätigungsmittel (17), einem Stellglied (16), welches das Betätigungsmittel (17) in Abhängigkeit von Regel- oder Stellgrößen zwischen zwei Endstellungen bewegt, und einem manuell betätigbaren Schaltmittel, das mit dem Stellglied (16) in Kontakt ist und es so bewegen kann, dass das Betätigungsmittel (17) in wenigstens eine der beiden Endstellungen unabhängig von den Regel- oder Stellgrößen bewegbar ist, wobei das Schaltmittel ein Exzenter (29) ist, welcher über ein manuelles Betätigungselement (23) betätigbar ist,
**dadurch gekennzeichnet, dass** der Exzenter (29) eine Kuppe (37) aufweist, welche in einer Montagestellung des Exzenters (29) in eine korrespondierende Vertiefung (38) einschnappt.

2. Stellantrieb (10) nach Anspruch 1, **dadurch gekennzeichnet, dass** der Exzenter (29) mit dem Stellglied (16) zusammenwirkt.

3. Stellantrieb (10) nach Anspruch 1 oder 2, **dadurch gekennzeichnet, dass** die Vertiefung (38) dem Stellglied (16) zugeordnet ist.

4. Stellantrieb (10) nach einem der Ansprüche 1 bis 3, **dadurch gekennzeichnet, dass** das Stellglied (16) eine Rampe (39) aufweist, an welcher eine Außenkontur (30) des Exzenters (29) anliegt, wenn der Exzenter (29) von der Betriebsstellung in die Montagestellung gedreht wird.

5. Stellantrieb (10) nach Anspruch 4, **dadurch gekennzeichnet, dass** die Rampe (39) eine Tangente zu dem an der Rampe (39) anliegenden Bereich der Außenkontur (30) des Exzenters (29) bildet, wenn der Exzenter (29) von der Betriebsstellung in die Montagestellung gedreht wird..

6. Stellantrieb (10) nach einem der Ansprüche 1 bis 5, **dadurch gekennzeichnet, dass** das Betätigungselement (23) ein manuell verschwenkbarer Hebel ist.

7. Stellantrieb (10) nach einem der Ansprüche 1 bis 6, **gekennzeichnet dadurch, dass** das Betätigungselement (23) und der Exzenter (29), insbesondere einstückig, mittels eines Wellenstummels (24) miteinander verbunden sind.

8. Stellantrieb (10) nach Anspruch 7, **dadurch gekennzeichnet, dass** das Betätigungselement (23) und der Exzenter (29) mittels des Wellenstummels (24) an einem Gehäuse (26) gelagert sind.

9. Stellantrieb (10) nach Anspruch 7 oder 8, **dadurch gekennzeichnet, dass** der Wellenstummel (24) durch einen Kragen (27), welcher mit einer Nut (28) zusammenwirkt, gedichtet am Gehäuse (26) gelagert ist.

10. Stellantrieb (10) nach Anspruch 9, **dadurch gekennzeichnet, dass** der Kragen (27) dem Wellenstummel (24) und die Nut (28) einer Bohrung (25) im Gehäuse (26) zugordnet ist.

11. Stellantrieb (10) nach einem der Ansprüche 7 bis 10, **gekennzeichnet durch** zwei Wellenstummel (24) zu einander gegenüberliegenden Seiten, welche durch den Hebel (23) brückenartig miteinander verbunden sind.

12. Stellantrieb (10) nach Anspruch 11, **dadurch gekennzeichnet, dass** beiden Wellenstummeln (24) je ein Exzenter (29) zugeordnet ist.

13. Stellantrieb (10) nach einem der Ansprüche 1 bis 12, **gekennzeichnet durch** ein Anschlagmittel (32, 34), welches die Drehbewegung des Exzenters in der Montagestellung begrenzt.

14. Stellantrieb (10) nach einem der Ansprüche 1 bis 13, **dadurch gekennzeichnet, dass** der Exzenter (29) durch ein Vorspannmittel, insbesondere durch eine mit einer Nase (36) zusammenwirkenden elastischen Zunge (35), in wenigstens einer Endstellung vorgespannt ist.

15. Stellantrieb (10) nach Anspruch 14, **dadurch gekennzeichnet, dass** die Zunge (35) dem Gehäuse (26) und die Nase (36) dem Exzenter (29) zugeordnet ist.

16. Anordnung aus einem Stellantrieb (10) nach einem der Ansprüche 1 bis 15 und einem Ventil (11), welches durch den Stellantrieb (10) in verschiedenen Stellungen zwischen einer vollständig geöffneten und einer vollständig geschlossenen Stellung einstellbar ist, **dadurch gekennzeichnet, dass** das Ventil (11) mittels des Exzenters (29) in eine vollständig geöffnete Stellung einstellbar ist.

## Claims

1. Actuating drive (10) for a valve (11) having an activation means (17), an actuator (16) which moves the activation means (17) between two end positions in dependence upon controlled or manipulated variables, and a manually activatable switching means being in contact with said actuator (16) which can be used to move the activation means (17) into at least one of the two end positions independently of the controlled or manipulated variables, wherein the switching means is an eccentric (29) which can be activated via a manual activation element (23), **characterised in that** said eccentric (29) has a round end (37) which, when the eccentric (29) is in a mounting position, snaps into a corresponding recess (38).

2. Actuating drive (10) as claimed in claim 1, **characterised in that** the eccentric (29) cooperates with the actuator (16).

3. Actuating drive (10) as claimed in claim 1 or 2, **characterised in that** the recess (38) is allocated to the actuator (16).

4. Actuating drive (10) as claimed in any one of claims 1 to 3, **characterised in that** the actuator (16) has a ramp (39), against which an outer contour (30) of the eccentric (29) lies if the eccentric (29) is rotated from the operating position to the mounting position.

5. Actuating drive (10) as claimed in claim 4, **characterised in that** the ramp (39) forms a tangent with respect to the region of the outer contour (30) of the eccentric (29) lying against the ramp (39) if the eccentric (29) is rotated from the operating position to the mounting position.

6. Actuating drive (10) as claimed in any one of claims 1 to 5, **characterised in that** the activation element (23) is a lever which can be pivoted manually.

7. Actuating drive (10) as claimed in any one of claims 1 to 6, **characterised in that** the activation element (23) and the eccentric (29) are connected to one another, in particular in one piece, by means of a shaft stub (24).

8. Actuating drive (10) as claimed in claim 7, **characterised in that** the activation element (23) and the eccentric (29) are mounted on a housing (26) by means of the shaft stub (24).

9. Actuating drive (10) as claimed in claim 7 or 8, **characterised in that** the shaft stub (24) is mounted on the housing (26) in a sealed manner by means of a collar (27) which cooperates with a groove (28).

10. Actuating drive (10) as claimed in claim 9, **characterised in that** the collar (27) is allocated to the shaft stub (24) and the groove (28) is allocated to a bore (25) in the housing (26).

11. Actuating drive (10) as claimed in any one of claims 7 to 10, **characterised by** two shaft stubs (24) on mutually opposite sides which are connected to one another in the manner of a bridge by means of the lever (23).

12. Actuating drive (10) as claimed in claim 11, **characterised in that** the two shaft stubs (24) are each allocated an eccentric (29).

13. Actuating drive (10) as claimed in any one of claims 1 to 12, **characterised by** a stop means (32, 34) which limits the rotational movement of the eccentric in the mounting position.

14. Actuating drive (10) as claimed in any one of claims 1 to 13, **characterised in that** the eccentric (29) is pretensioned in at least one end position by means of a pretensioning means, in particular by means of an elastic tongue (35) which cooperates with a lug (36).

15. Actuating drive (10) as claimed in claim 14, **characterised in that** the tongue (35) is allocated to the housing (26) and the lug (36) is allocated to the eccentric (29).

16. Assembly consisting of an actuating drive (10) as claimed in any one of claims 1 to 15 and of a valve (11) which can be adjusted by the actuating drive (10) to different positions between a completely open position and a completely closed position, **characterised in that** the valve (11) can be adjusted to a completely open position by means of the eccentric (29).

## Revendications

1. Mécanisme de réglage (10) d'une soupape (11) avec un moyen d'actionnement (17), un organe de réglage (16) qui déplace le moyen d'actionnement (17) en fonction de grandeurs de réglage ou de régulation entre deux positions de fin de course, et un moyen de commutation à commande manuelle en contact avec l'organe de réglage (16) et qui peut être déplacé pour que le moyen d'actionnement (17) dans au moins l'une des deux positions de fin de course, soit mobile indépendamment des grandeurs de réglage ou de régulation, le moyen de commutation étant en excentrique (29) manoeuvré par un élément d'actionnement manuel (23),
mécanisme **caractérisé en ce que**
l'excentrique (29) comporte un sommet (37) qui, en position de montage de l'excentrique (29) s'encliquette dans une cavité correspondante (38).

2. Mécanisme de réglage (10) selon la revendication 1,
**caractérisé en ce que**
l'excentrique (29) coopère avec l'organe de réglage (16).

3. Mécanisme de réglage (10) selon la revendication 1 ou 2,
**caractérisé en ce que**
la cavité (38) est associée à l'organe de réglage (16).

4. Mécanisme de réglage (10) selon l'une des revendications 1 à 3,
**caractérisé en ce que**
l'organe de réglage (16) comporte une rampe (39) contre laquelle s'appuie le contour extérieur (30) de l'excentrique (29) lorsque l'excentrique (29) est pivoté de sa position de fonctionnement à sa position de montage.

5. Mécanisme de réglage (10) selon la revendication 4,
**caractérisé en ce que**
la rampe (39) a une tangente vers la zone du contour extérieur (30) de l'excentrique (29) qui s'applique contre la rampe (39), lorsque l'excentrique (29) est pivoté de sa position de fonctionnement à sa position de montage.

6. Mécanisme de réglage (10) selon l'une des revendications 1 à 5,
**caractérisé en ce que**
l'élément d'actionnement (23) est un levier pivoté manuellement.

7. Mécanisme de réglage (10) selon l'une des revendications 1 à 6,
**caractérisé en ce que**
l'élément d'actionnement (23) et l'excentrique (29) sont reliés l'un à l'autre notamment en une seule pièce par un élément d'axe (24).

8. Mécanisme de réglage (10) selon la revendication 7,
**caractérisé en ce que**
l'élément d'actionnement (23) et l'excentrique (29) sont montés dans un boîtier (26) par l'intermédiaire de l'élément d'axe (24).

9. Mécanisme de réglage (10) selon la revendication 7 ou 8,
**caractérisé en ce que**
l'élément d'axe (24) est monté de manière étanche dans le boîtier (26) par une collerette (27) qui coopère avec une rainure (28).

10. Mécanisme de réglage (10) selon la revendication 9,
**caractérisé en ce que**
la collerette (27) est associée à l'élément d'axe (24) et la rainure (28) est associée à un perçage (25) du boîtier (26).

11. Mécanisme de réglage (10) selon l'une des revendications 7 à 10,
**caractérisé par**
deux éléments d'axe (24) sur des côtés opposés et qui sont reliés l'un à l'autre à la manière d'un pont, par le levier (23).

12. Mécanisme de réglage (10) selon la revendication 11,
**caractérisé en ce que**
les deux éléments d'axe (24) sont associés respectivement à un excentrique (29).

13. Mécanisme de réglage (10) selon l'une des revendications 1 à 12,
**caractérisé par**
une butée (32, 34) qui limite le mouvement de rotation de l'excentrique en position de montage.

14. Mécanisme de réglage (10) selon l'une des revendications 1 à 13,
**caractérisé en ce que**
l'excentrique (29) est précontraint par un moyen de précontrainte, notamment par une languette élastique (35) coopérant avec un bec (36), au moins dans une position de fin de course.

15. Mécanisme de réglage (10) selon la revendication 14,
**caractérisé en ce que**
la languette (35) est associée au boîtier (26) et le bec (36) est associé à l'excentrique (29).

16. Montage composé d'un entraînement de réglage (10) selon l'une des revendications 1 à 15 et d'une vanne (11) qui est réglable par le mécanisme de réglage (10) dans différentes positions entre une position complètement ouverte et une position complètement fermée,
dispositif **caractérisé en ce que**
la soupape (11) est réglable par l'excentrique (29) dans une position complètement ouverte.
